# EUROPEAN PATENT APPLICATION

(11) **EP 1 734 650 A1**
(43) Date of publication of application: **20.12.2006**
(21) Application number: 05720772.2
(22) Date of filing: 15.03.2005
(51) Int. Cl.: H02P 9/00, F03D 7/04, F03D 9/00

(54) **POWER GENERATION SYSTEM**

(30) Priority: 16.03.2004 JP 2004074669
(71) Applicant: Shinko Electric Co., Ltd, Minato-ku Tokyo 1058564 (JP)
(72) Inventor: Okubo, Kazuo, Ise-shi, Mie 5168550 (JP); Morita, Masami, Ise-shi, Mie 5168550 (JP); Nakano, Katsuyoshi, Ise-shi, Mie 5168550 (JP)
(74) Representative: Joly, Jean-Jacques
(86) International application number: PCT/JP2005/004515
(87) International publication number: WO 2005/088828

(57) **Abstract**

Wind power can be always detected even when a wind turbine 11 forcibly brakes, as well as cost of components can be reduced. A generator includes a wind turbine 11 rotated by wind power to generate a driving force, a dynamo 19 operated by the driving force of the wind turbine 11 to generate electricity, a short-circuit brake 21 for switching the output side of the dynamo 19 between an output state and a short-circuit state, a rotational speed input unit 41 or an arithmetic processing part 51 for recognizing the magnitude of the wind power in both of the output and short-circuit states based on the rotational speeds of the wind turbine 11 in both of the output and short-circuit states, and an arithmetic processing part 51 for determining which state the dynamo 19 should be changed over to between the output and short-circuit states based on the rotational speed of the wind turbine 11 and controlling the switching of the short-circuit brake 21 based on the determination result.

## Description

### Technical Field

The present invention relates to a generator for converting natural energy such as wind energy into electric energy to be used as electric power for various devices.

### Background Art

For example, as disclosed in the patent document 1, a wind turbine generator is constructed to transform kinetic energy of wind power into electric power of electric energy by rotating a wind turbine with the wind power and operating the generator with this rotation driving force of the wind turbine. In addition, the wind turbine generator includes an anemometer, so that the switching between rotation and stopping of the wind turbine is controlled based on the wind speed (or wind power) detected by the anemometer in accordance with variation of the wind power.

Patent Document 1: JP-A-2003-284393.

### Disclosure of the Invention

### Problems that the Invention is to Solve

On the other hand, similar to general devices, the wind turbine generator is also required to reduce cost, and it is necessary to detect wind power without an anemometer, which has causes increasing cost in a conventional construction. It can be conceived that the rotational speed of the wind turbine may be detected as the magnitude of the wind power. In this case, for example, when the wind turbine is forcibly stopped using a clutch brake and the like in a strong wind, the wind turbine is completely stopped, so that the magnitude of the wind power cannot be detected. Also, in this case, it is impossible to recognize a timing for resuming rotation of the wind turbine, i.e., when the magnitude of the strong wind is decreased.

Accordingly, it is an object of the invention to provide a generator capable of reducing cost of components such as an anemometer as well as always detecting wind power even when the wind turbine is forcibly stopped.

### Means for Solving the Problems

The invention includes: a driving force generating means rotated by natural energy to generate a driving force; an electricity generating means operated by the driving force of the driving force generating means to generate electricity; a short-circuit means for switching an output side of the electricity generating means between an output state and a short-circuit state; and a magnitude recognition means for recognizing a magnitude of the natural energy in both of the output state and the short-circuit state based on a rotational speed of the driving force generating means in the output state and a rotational speed of the driving force generating means in the short-circuit state.

According to this construction, the rotation and the braking of the driving force generating means is performed by the switching between the output and short-circuit states of the electricity generating means by the short-circuit means. Therefore, although there is a difference of the braking force applied from the electricity generating means to the driving force generating means between the output and short-circuit states, the driving force generating means is rotated by natural energy in any state. As a result, it is possible to always recognize the magnitude of natural energy based on the rotational speed of the driving force generating means without a dedicated device for detecting the natural energy, which has caused increasing cost.

In addition, the present invention may include a control means for determining which state the generating means should be changed over between the output state and the short-circuit state based on the rotational speed of the driving force generating means, and controlling the short-circuit means based on the determination result. According to this construction, the rotation and the braking of the driving force generating means can be changed over in accordance with the magnitude of natural energy.

Furthermore, the control means of the present invention controls the short-circuit means in such a way that the short-circuit means is changed over from the output state to the short-circuit state when the rotational speed of the driving force generating means in the output state is equal to or higher than a braking initiation value, and the short-circuit means is changed over from the short-circuit state to the output state when the rotational speed of the driving force generating means in the short-circuit state is lower than a braking initiation value. According to this construction, it is possible to prevent breakdown caused by excessively rotating the driving force generating means with excessive natural energy.

Furthermore, the electricity generator of the present invention may be a wind turbine generator that uses wind power as natural energy.

### Advantage of the Invention

According to the present invention, it is possible to always recognize the magnitude of natural energy based on the rotational speed of the driving force generating means without a dedicated device for detecting natural energy, which has caused increasing cost.

### Best Mode for Carrying Out the Invention

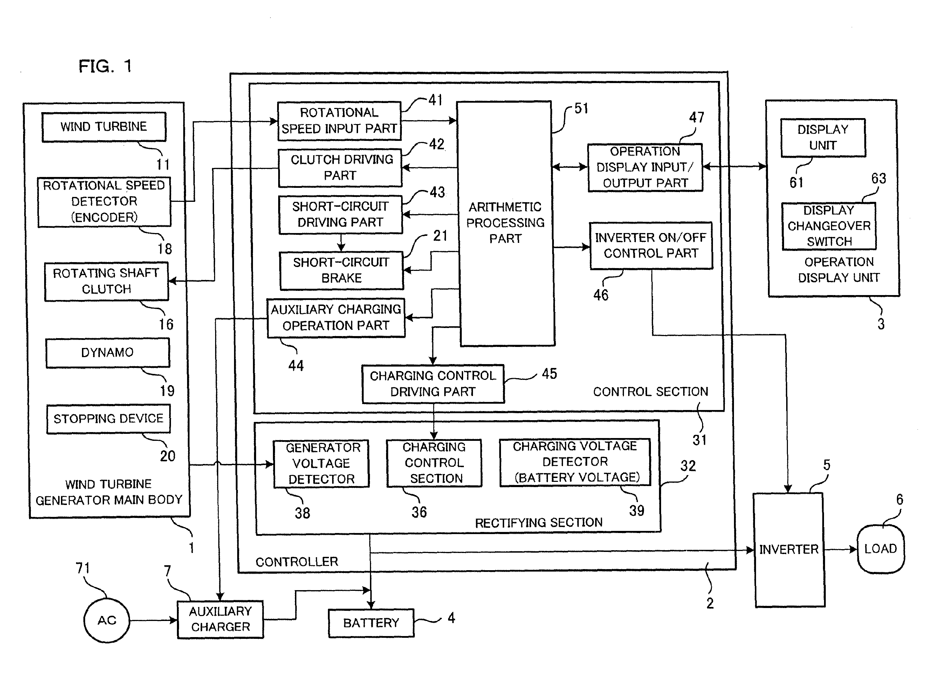

Hereinafter, embodiments of the present invention will be described with reference to Figs. 1 to 3.
As shown in Fig. 1, a wind turbine generator, a generator according to the present embodiment, includes a wind turbine generator main body 1 for converting wind energy as a kind of natural energy into alternating electric power of electric energy to output it; a controller 2 having a function of controlling the wind turbine generator main body 1, a function of rectifying alternating electric power into direct electric power, etc.; an operation display unit 3 for displaying the operating condition, setting condition, etc., of the wind turbine generator; a battery 4 to be charged with the direct electric power rectified by the controller 2; an inverter 5 for converting the electric power stored in the battery 4 into alternating electric power to be supplied to an external load 6; and an auxiliary charger 7 for supplying auxiliary electric power to the battery 4. The external load 6 includes the controller 2 of the wind turbine generator, an electrical power device such as a refrigerator of the external load 6, a photo-thermal device such as a lamp or an air-conditioner, etc.

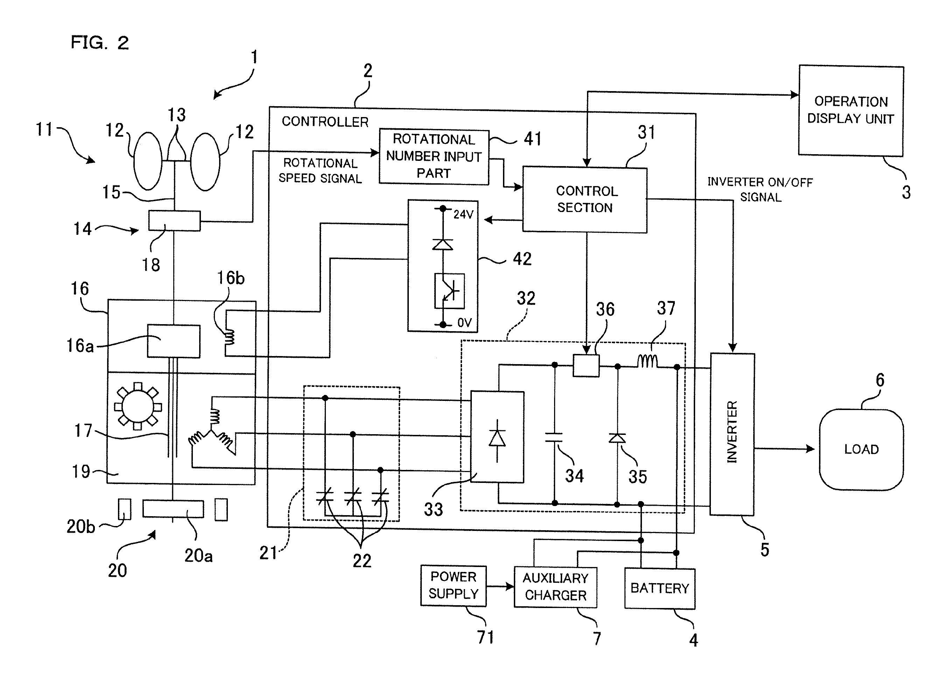

As illustrated in FIG. 2, the above wind turbine generator main body 1 includes a wind turbine 11 for generating a rotation driving force in accordance with wind power. The wind turbine 11 includes a plurality of wind turbine blades 12 for receiving wind, a gyration support member 13 supporting the wind turbine blades 12 to allow them to gyrate horizontally, and a rotation support mechanism 14 supporting the rotational center of the gyration support member 13. The rotation support mechanism 14 is vertically erected. The rotation support mechanism 14 includes a penetration shaft member 15 connected at its upper end to the rotational center of the gyration support member 13, a hollow shaft member 17 to which the penetration shaft member 15 is rotatably inserted, and a rotating shaft clutch 16 capable of connecting the penetration shaft member 15 and the hollow shaft member 17 with each other.

The above penetration shaft member 15 is provided with a rotational speed detector 18. The rotational speed detector 18 includes an encoder, which outputs a rotational speed signal of the number of pulses in accordance with the rotational speed of the penetration shaft member 15 (the number of revolutions per unit time). Alternatively, the rotational speed detector 18 may have a construction in which a detection object such as a magnet or a reflection plate is attached to a side face of the gyration support member 13 such that a rotational speed signal pulse is output every when the detection object is detected.

The rotating shaft clutch 16 interposed between the rotating shaft members 15 and 17 is constructed of a de-energization operation type. Specifically, the rotating shaft clutch 16 includes a spring (not shown in the drawing) wound in a coil shape, a spring actuating mechanism 16a for expanding/constricting the inner diameter of the spring, and a coil member 16b for actuating the spring actuating mechanism 16a. The penetration shaft member 15 is rotatably inserted into the inside of the spring, and an end of the spring is connected to the hollow shaft member 17. In addition, the other end of the spring can be abutted to the lever of the spring actuating mechanism 16a, and can be moved opposite to the winding direction of the spring by operating the lever. In addition, the spring is set such that its inner diameter in a usual state (state that the outside power is not given) strongly constricts the penetration shaft member 15. Thus, when no clutch actuating current is supplied to the coil member 16b, the rotating shaft clutch 16 is operated such that the abutment between the lever of the spring actuating mechanism 16a and the other end of the spring is released, and the penetration shaft member 15 and the hollow shaft member 17 are strongly jointed with each other by constricting the diameter of the spring to sufficiently transmit the rotation driving force of the penetration shaft member 15 to the hollow shaft member 17. When a clutch actuating current is supplied, the lever of the spring actuating mechanism 16a is abutted to the other end of the spring and presses it opposite to the winding direction of the spring, so that the inner diameter of the spring is expanded, and the jointing between the spring and the penetration shaft member 15 is release.

The hollow shaft member 17 to which the rotation driving force is transmitted through the rotating shaft clutch 16 is provided with a dynamo 19 of, e.g., a three-phase alternating current type. The dynamo 19 is allowed to output alternating current (AC) electric power in accordance with the rotational speed of the hollow shaft member 17. A short-circuit brake 21 is connected to the output side of the dynamo 19. The short-circuit brake 21 is constructed to switch the output side of the dynamo 19 between an output state and a short-circuit state. Specifically, the short-circuit brake 21 includes a short-circuit relay 22 connected to the respective terminals of the dynamo 19. The short-circuit relay 22 is allowed to switch between an open state and a closed state based on whether to be shorted or opened based whether to energized or not from the controller 2. When the short-circuit relay 22 is opened, the dynamo 19 becomes an output state. In addition, when the short-circuit relay 22 is closed, the dynamo 19 becomes a short-circuit state. The short-circuit brake 21 is controlled by the controller 2 to short-circuit the output side of the dynamo 19 upon an abnormal condition such as strong wind or malfunction, so as to forcibly brake the rotation of the rotation support mechanism 14 by the wind turbine blades 12.

In addition, a stopping device 20 for fixing the rotation support mechanism 14 by a manual operation is provided on the lower portion of the penetration shaft member 15. The stopping device 20 includes an annular member 20a attached on the penetration shaft member 15, and a pressing member 20b detachably provided to make contact with the outer circumferential surface of the annular member 20a. Part of the pressing member 20b is installed on a non-illustrated fixed portion such as a stand or the ground-floor area. When the pressing member 20b is pressed onto the annular member 20a by a manual operation, the stopping device 20 fixes the penetration shaft member 15 with a great braking force to finally stop the rotation of the rotation support mechanism 14. Alternatively, the stopping device 20 may be constructed to automatically operate in accordance with operation instructions from an operation display unit 3 as will be described later.

The wind turbine generator main body 1 constructed as described above is connected to the controller 2. As illustrated in FIG. 1, the controller 2 includes a control section 31 for controlling the wind turbine generator, and a rectifying section 32 for rectifying the alternating current (AC) electric power output from the dynamo 19 of the wind turbine generator main body 1, into direct current (DC) electric power. The control section 31 includes a rotational speed input part 41, a clutch driving part 42, and a short-circuit driving part 43. These parts 41 to 43 are connected to the rotational speed detector 18 and the rotating shaft clutch 16 of the wind turbine generator main body 1, and the short-circuit brake 21, respectively.

The rotational speed input part 41 has a function of converting the rotational speed signal from the rotational speed detector 18, into a signal form suitable for signal processing. The clutch driving part 42 has a function of outputting a clutch driving signal to the rotating shaft clutch 16 to control the operating condition of the rotating shaft clutch 16, that is, control the rotating shaft clutch 16 so as to produce or cancel the coupling force between the penetration and hollow rotating shaft members 15 and 17 of FIG. 2. The short-circuit driving part 43 has a function of outputting a driving signal to the short-circuit relay 22 of the short-circuit brake 21 upon a usual operation to fall the dynamo 19 in a short-circuit state in an abnormal condition.

The controller 2 includes an auxiliary charging operation part 44, a charging control driving part 45, an inverter ON/OFF control part 46, and an operation display input/output part 47. The controller 2 further includes an arithmetic processing part 51 for monitoring and controlling the respective parts 41 to 47. Details of the arithmetic processing part 51 will be described later.

The above auxiliary charging operation part 44 is connected to the auxiliary charger 7 called a DC power pack for charging the battery 4 with auxiliary electric power. The auxiliary charger 7 is integrally provided by being mounted on a single board or being accommodated in a casing. The auxiliary charger 7 has a function of switching to start and stop an auxiliary charging operation to the battery 4 based on an operation signal from the auxiliary charging operation part 44.

The battery 4 charged by the auxiliary charger 7 is also connected to the rectifying section 32 of the controller 2. The rectifying section 32 is constructed to convert the AC electric power delivered from the dynamo 19 of the wind turbine generator main body 1 into DC electric power to charge the battery 4.

That is, as illustrated in FIG. 2, the rectifying section 32 includes a bridge diode 33 connected to the dynamo 19; a charging capacitor 34 connected in parallel to the anode and cathode of the bridge diode 33; a diode 35 connected in parallel to the bridge diode 33 downstream of the charging capacitor 34 in the same direction of the bridge diode 33; a charging control section 36 provided between the charging capacitor 34 and the diode 35 for controlling to switch between passing and interrupting of current; and a coil 37 provided downstream of the diode 35. The above charging control section 36 comprises a semiconductor switch such as a transistor, and connected to the charging control driving part 45 of FIG. 1. The charging control driving part 45 outputs a charging control signal to control the energizing time of flowing electric current from the bridge diode 33 to the diode 35. The rectifying section 32 constructed as described above is connected to the battery 4 and the inverter 5. The rectifying section 32 charges the battery 4 with electric power of a charging voltage in accordance with the energizing time controlled by the charging control section 36.

As illustrated in FIG. 1, the rectifying section 32 includes a generator voltage detector 38 for detecting the dynamo voltage of the alternating current (AC) electric power input from the dynamo 19; and a charging voltage detector 39 for detecting a charging voltage, i.e., battery voltage, for charging the battery 4. These voltage detectors 38 and 39 are connected to the arithmetic processing part 51, and output the detected voltage to the arithmetic processing part 51.

Similar to the above-described charging control driving part 45, the inverter ON/OFF control part 46 connected to the arithmetic processing part 51 is connected to the inverter 5. The inverter 5 has an output function of converting the DC electric power stored in the battery 4 into, for example, domestic AC electric power and outputting it to the external load 6, and a function of switching between starting and stopping of the output function in accordance with a signal from the inverter ON/OFF control part 46.

Further, the operation display input/output part 47 connected to the arithmetic processing part 51 is detachably connected to the operation display unit 3 through a communication cable 64. The operation display unit 3 has a display unit 61 such as seven-segment LEDs or an LCD and a display changeover switch 63. The display unit 61 is designed such that operating conditions of the wind turbine generator can be shown with characters or numerical values. The operating conditions include the rotational speed of the rotation support mechanism 14, i.e., wind speed, the dynamo voltage, the charging voltage, i.e., the battery voltage, and operating conditions of each of other units.

The display changeover switch 63 is set to change the display of operating conditions on the display unit 61 by manual operation. The operation display unit 3 includes a control part comprising an arithmetic part, a memory, and other parts, which are not illustrated. In addition to a function of controlling the operation display unit 3 itself, the control part has a function of transmitting predetermined operation conditions to the controller 2 or the arithmetic processing part 51, a function of setting the operation of the inverter 5 to a predetermined mode using a mode changeover switch for the arithmetic processing part 51, a function of selecting execution of various functions provided in the arithmetic processing part 51, and the like, in the form of a program. Each of the functions of the operation display unit 3 may be implemented in the form of hardware instead of software such as a program. Furthermore, the operation display unit 3 may have a mode changeover switch for switching by manual operation between an output stop mode for stopping output of the inverter 5 when the voltage stored in the battery 4 is not more than a setup vale and an output save mode for always maintaining the output of the inverter 5.

Likewise, the arithmetic processing part 51 of the controller 2 includes an arithmetic part or a memory, not shown in the drawing, and has various functions for controlling the wind turbine generator in the form of a program. Each function may be implemented in the form of hardware instead of software such as a program.

The arithmetic processing part 51 has an auxiliary charging processing function, an abnormal operation braking function, a rotation accelerating function, a low-voltage charging function, a magnitude recognition function, a rotation control function, and so on. The auxiliary charging processing function is a function of monitoring the charging voltage detected by the charging voltage detector 39 and permitting the auxiliary charger 7 to charge the battery 4 with auxiliary electric power when the charging voltage is lower than a first predetermined value. The abnormal operation braking function is a function of energizing the short-circuit relay 22 of the short-circuit brake 21 to be open upon a normal operation so that the AC electric power of the dynamo 19 can be supplied to the bridge diode 33, and short-circuiting the output of the dynamo 19 to generate braking force on the dynamo 19 when the energization is stopped because of an abnormal operation. The rotation accelerating function is a function of releasing the coupling state of the rotating shaft clutch 16 so that only the penetration shaft member 15 can be freely rotated, when the rotational speed of the rotation support mechanism 14 is lower than a second predetermined value because of decreasing wind power, and restoring the coupling state of the rotating shaft clutch 16 when the rotational speed of the penetration shaft member 15 is increased to a certain value or higher. The low-voltage charging function is a function of performing a charging control to switch the charging control section 36 between ON and OFF states when the rotational speed of the rotation support mechanism 14 is larger than a third predetermined value and maintaining the charging control section 36 in the ON state when the rotational speed is decreased below the third predetermined value.

The magnitude recognition function is a function of recognizing the magnitude of wind power in both output and short-circuit states based on the rotational speed of the wind turbine 11 when the dynamo 19 is in an output state and the rotational speed of the wind turbine 11 when the dynamo 19 is in a short-circuit state. The rotation control function is a function of determining which condition should be selected for the dynamo 19 between the output state and the short-circuit state based on the rotational speed of the wind turbine 11 as well as controlling the switching of the short-circuit brake 21 based on the determination result. Specifically, the rotation control function is a function of controlling the short-circuit brake 21 so as to be switched to the short-circuit state when the rotational speed of the wind turbine 11 is equal to or higher than a braking initiation value in the output state and switched to the output state when the rotational speed of the wind turbine 11 is below the braking initiation value in the short-circuit condition. Here, the braking initiation value refers to an upper limitation value of a rotation speed until the wind turbine 11 is broken down or abnormally driven due to an extremely high wind power (or speed). The brake release value refers to a rotational speed value for allowing the wind turbine 11 to be safely rotated by decreasing the wind power (or speed) after the brake is operated. The rotation control function is exemplary, and a condition for switching the dynamo 19 between the output state and the short-circuit state may be arbitrarily changed depending on the specification of the wind turbine generator.

Operations of the wind turbine generator of the above-described construction will be described.
Upon a general driving stop, as illustrated in FIG. 2, the energization to the de-energization operation type rotating shaft clutch 16 is stopped so that the diameter of the spring of the rotating shaft clutch 16 is constricted. Thereby, the penetration shaft member 15 and the hollow shaft member 17 of the rotation support mechanism 14 are united by the rotating shaft clutch 16. In addition, the energization to the short-circuit relay 22 of the short-circuit brake 21 is stopped so that the dynamo 19 falls in a short-circuit state. Thereby, the dynamo 19 is in a state that its operation requires a large load. As a result, even when a large rotation driving force is applied to the rotation support mechanism 14 by the wind, a heavier load acts as a braking force to the rotation of the rotation support mechanism 14 as the rotation support mechanism 14 rotates the dynamo 19 at a higher speed to be operated, so that a high-speed rotation of the rotation support mechanism 14 is inhibited.

Further, upon a special driving stop such as a strong wind or inspection, a braking force in the stopping device 20 is generated. Thereby, the penetration shaft member 15 of the rotation support mechanism 14 is fixed so that the rotation of the wind turbine 11 is completely stopped.

Subsequently, during the driving, the operation display unit 3 is connected to the controller 2 upon necessity, and then, the controller 2 and the operation display unit 3 are powered on. In the controller 2, the energization to the rotating shaft clutch 16 is started. Thereby, the coupling state of the rotating shaft clutch 16 is released so that the penetration shaft member 15 is separated from the hollow shaft member 17. As a result, since the penetration shaft member 15 falls into a freely rotatable state apart from the hollow shaft member 17, the rotational speed of the penetration shaft member 15 can be rapidly increased even when a weak wind strikes the wind turbine blades 12. In addition, the short-circuit state of the dynamo 19 is released by energizing the short-circuit brake 21 so that the AC electric power generated by the dynamo 19 can be supplied to the controller 2. On the other hand, in the operation display unit 3, an operating condition of the control section 31, e.g., the rotational speed of the penetration shaft member 15 is displayed with a numerical value or the like.

Subsequently, the controller 2 operates such that the arithmetic processing part 51 effects the auxiliary charging processing function, the abnormal operation braking function, the drive braking function, the rotation accelerating function, the low-voltage charging function, the magnitude recognition function, the rotation control function, and so on.

### (Magnitude Recognition Function)

Specifically, when the wind turbine 11 starts to rotate, the rotational speed signal having a pulse shape is output from the rotational speed detector 18 provided in the penetration shaft member 15 and input to the rotational speed input part 41. In the rotational speed input part 41, the rotational speed signal is transformed to a signal form suitable for a signal processing in the digital circuit and then output to the control section 31. The arithmetic processing part 51 counts the pulse input of the rotational speed signal and obtains the rotational speed of the wind turbine 11 based on the counted value for a predetermined time period, i.e., the number of rotations.

Subsequently, whether the dynamo 19 falls in the output state or the short-circuit state is recognized. In the output state, wind power (i.e., a wind speed) for the rotational speed is calculated by referring to an output state rotational-speed/wind-power data table. On the other hand, in the short-circuit state, wind power (i.e., a wind speed) corresponding to the rotational speed is calculated by referring to a short-circuit state rotational-speed/wind-power data table. The load applied to the wind turbine 11 is smaller when the dynamo 19 falls in the output state in comparison with the short-circuit state. Therefore, assuming that the wind turbine 11 has the same rotational speed in both the output and short-circuit states, higher wind power (i.e., a wind speed) is required in the output state in comparison with the short-circuit state.

### (Rotation Accelerating Function)

In addition, the rotational speed of the penetration shaft member 15 is monitored based on the rotational speed signal from the rotational speed detector 18. When the rotational speed is equal to or higher than a sum of a certain value and a second predetermined value, the energization to the rotating shaft clutch 16 is stopped, so that the connection state by the rotating shaft clutch 16 is restored. As a result, the inertia of the penetration shaft member 15 is exerted, so that the rotation support mechanism 14 in which the penetration and hollow shaft members 15 and 17 are united is rotated in a relatively high speed. In addition, the rotational driving force of the rotation support mechanism 14 actuates the dynamo 19, so that AC electric power having a high voltage is supplied to the controller 2.

When the wind is weak, the rotational speed of the rotation support mechanism 14 decreases due to the load for operating the dynamo 19. When the rotational speed decreases below a second predetermined value, the energization to the rotating shaft clutch 16 is resumed, and the connection state of the rotating shaft clutch 16 is released, so that the rotation of only the penetration shaft member 15 can be freely rotated. Furthermore, when the penetration shaft member 15 falls into a state that can be accelerated in a short time even by a weak wind, and its rotational speed is accelerated to a certain value, the connection state by the rotating shaft clutch 16 is restored, and the generation of the dynamo 19 is resumed. Thereby, even in case of a weak wind, AC electric power of a high voltage can be intermittently supplied to the controller 2.

### (Low-voltage Charging Function)

The AC electric power supplied to the controller 2 as described above is full-wave-rectified in the bridge diode 33 and then smoothed by a smoothing circuit made up of a charging capacitor 34, a diode 35, and a coil 37, to be stored in the battery 4. The electric power stored in the battery 4 is used as the power supply of the controller 2. In addition, the electric power is converted into AC electric power by the inverter 5 to be used as the power supply of the external load 6.

Upon this, as shown in FIG. 6, the charging voltage and charging current for charging the battery 4 are controlled by the charging control section 36. That is, when the rotational speed of the rotation support mechanism 14 is equal to or higher than the third predetermined value, the battery 4 is judged to be charged with a charging voltage considerably higher than the rated voltage of the battery 4. Thus, a charging control for switching the charging control section 36 between the ON state and the OFF is performed to lower the charging voltage. On the other hand, when the rotational speed decreases below the third predetermined value, the battery 4 is judged to be charged with a charging voltage near the rated voltage of the battery 4. Thus, a charging control for keeping the charging control section 36 in the ON state is performed to charge the battery 4 with a large charging current.

### (Auxiliary Charging Processing Function)

In addition, while the battery 4 is charged, the charging voltage detected by the charging voltage detector 39 is monitored. When the charging voltage decreases below the first predetermined value, charging the battery 4 with auxiliary electric power by the auxiliary charger 7 is permitted.

### (Abnormal Operation Braking Function)

As illustrated in FIG. 2, when the wind turbine generator is normally operated operation, the short-circuit relay 22 of the short-circuit brake 21 is opened by the energization. The AC electric power from the dynamo 19 is supplied to the rectifying section 32 of the bridge diode 33 or other elements to charge the battery 4. On the other hand, when the controller 2 is brought into an emergency stop because of an abnormal condition such as wear or damage of parts, all signal outputs that are being output to the wind turbine generator main body 1 and the like are stopped. As a result, because the energization to the short-circuit relay 22 of the short-circuit brake 21 is stopped, the dynamo 19 is brought into a short-circuit state.

When the energization to the rotating shaft clutch 16 is stopped, the spring is strongly jointed with the penetration shaft member 15 because the rotating shaft clutch 16 is a de-energization operation type. Thereby, the penetration shaft member 15 and the hollow shaft member 17 of the rotation support mechanism 14 are united by the rotating shaft clutch 16. Thus, the rotational speed of the rotation support mechanism 14 is rapidly decreased due to the heavy load from the short-circuited dynamo 19.

### (Rotation Control Function)

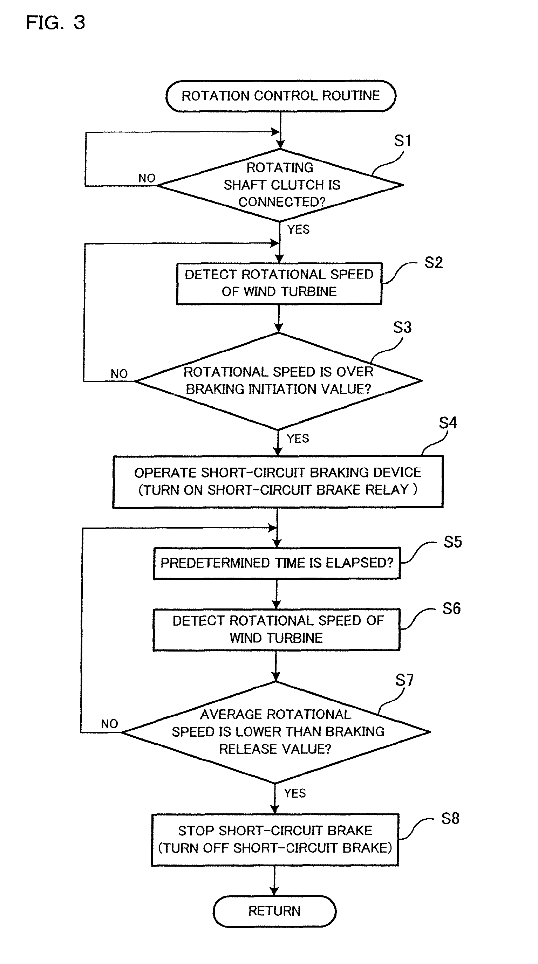

In addition, while the wind turbine generator is driven, the rotation control routine of Fig. 3 is executed in parallel with other processing routines for executing the aforementioned functions in a time-divisional manner. When the rotational control routine is executed, as shown in Fig. 3, whether or not the penetration and hollow shaft members 15 and 17 are connected using the rotating shaft clutch 16 is determined in order to identify whether or not the wind turbine 11 is not influenced by the dynamo 19 in the aforementioned rotation accelerating function and falls in an idle rotation state (S1). When the connection is not performed using the rotating shaft clutch 16 (NO in S1), it is determined that the wind turbine 11 is in an idle rotation state, and the step S1 is performed again to stand by until the connection using the rotating shaft clutch 16 is performed.

On the other hand, when the connection using the rotating shaft clutch 16 is performed (YES in S1), it is determined that the wind turbine 11 is rotated with the load applied from the dynamo 19. Then, the rotational speed of the penetration shaft member 15, i.e., the rotational speed of the wind turbine 11 is detected based on the rotational speed signal from the rotational speed detector 18 (S2). Subsequently, it is determined whether or not the rotational speed is equal to or higher than the braking initiation value (S3). If the rotational speed is below the braking initiation value (NO in S3), it is determined that wind turbine 11 is rotated within an allowable wind power range, and the step S2 is performed again. As a result, when the steps S2 and S3 are repeatedly performed, the dynamo 19 is operated by the rotation driving force of the wind turbine 11, so that the generated AC electric power is supplied to the controller 2.

If the rotational speed is equal to or higher than the braking initiation value (YES in S3), it is determined that the wind turbine 11 is rotated in a highly probable trouble range due to a strong wind, and the short-circuit brake 21 is operated. In addition, the dynamo 19 is short-circuited so that a high load is applied to the wind turbine 11. As a result, the wind turbine 11 is slowly rotated even in a strong wind, so that a trouble caused by the excessive rotational speed can be prevented (S4).

Then, the braking operation is maintained in a standby state until a predetermined time period, for example, fifteen minutes is elapsed. This predetermined standby time is a time period supposed to decrease the wind power as much as no trouble is generated, and is arbitrarily determined depending on the environment where the wind turbine generator is installed (S5). Subsequently, an average rotational speed of the wind turbine 11 is determined. In other words, even when the braking of the wind turbine 11 is performed by short-circuiting the dynamo 19, the wind turbine 11 is rotated in a rotational speed in accordance with the wind power. Also, this rotational speed is averaged for, for example, five minutes, and this average value is set as an average rotational speed.

Then, it is determined whether or not the average rotational speed is below the braking release value (S7). If the average rotational speed is not below the braking release value (NO in S7), it is determined that a strong wind continuously blows, and the step S5 is executed again. In addition, the braking state is maintained until a strong wind is attenuated. On the other hand, if the average rotational speed is below the braking release value (YES in S7), it is determined that the wind power (or wind speed) is decreased as much as no trouble is caused, so that the operation of the short-circuit brake 21 is released. As a result, the dynamo 19 is rotated in a relatively high speed in comparison with the rotation driving force of the wind turbine 11, and the generated AC electric power is supplied to the controller 2.

As described above, the power supply unit of the present embodiment, as shown in Fig. 1, includes the wind turbine 11 (a driving force generating means) rotated by wind power as a natural energy source to generate a driving force, the dynamo 19 (a generating means) operated by the driving force from the wind turbine 11 to generate electricity, the short-circuit brake 21 (a short-circuit means) for switching the output side of the dynamo 19 between the output state and the short-circuit state, and the rotational speed input part 41 or the arithmetic processing part 51 (a magnitude recognition means) for recognizing the magnitude of the wind power in both output and short-circuit states based on the rotational speed of the wind turbine 11 in both output and short-circuit states.

Although the power supply unit of the present embodiment has been described by exemplifying a wind turbine generator that uses wind power, the present invention is not limited thereto, and may be applied to generators that use any natural energy such as water, sea waves, or solar power.

According to the aforementioned construction, the rotation and the braking of the wind turbine 11 are made by switching the dynamo 19 between the output state and the short-circuit state using the short-circuit brake 21. Therefore, although there is a difference of the braking force applied from the dynamo 19 to the wind turbine 11 between the output state and the short-circuit state, the wind turbine 11 is rotated by wind power in any state. As a result, it is possible to always recognize the magnitude of wind power based on the rotation speed of the wind turbine 11 even by using a dedicated device such as an anemometer, which has caused increasing cost.

In addition, the power supply unit of the present embodiment determines which state should be switched by the dynamo 19 between the output state and the short-circuit state based on the rotation speed of the wind turbine 11, and also has the arithmetic processing part 51 (a control means) for controlling the switching of the short-circuit brake 21 based on the determination result. According to this construction, it is possible to control the switching between the rotation and the braking of the wind turbine 11 depending on the magnitude of the natural energy such as wind power.

In addition, the arithmetic processing part 51 of the present embodiment, as shown in Fig. 3, has a rotation control routine in which the short-circuit brake 21 is controlled to be changed over to the short-circuit state when the rotational speed of the wind turbine 11 in the output state is equal to or higher than the braking initiation value and the short-circuit brake 21 is controlled to be changed over from the short-circuit state to the output state when the rotational speed of the wind turbine 11 in the short-circuit state is below the braking release value. As a result, it is possible to prevent the breakdown that may be caused by excessively rotating the wind turbine 11 with excessive natural energy such as wind power.

While the present invention has been described based on preferred embodiment, the present invention can be variously changed without departing from the spirit of the invention. Specifically, although the present embodiment has been described using a gyro-mill type wind turbine 11, the present invention is not limited thereto, and it is possible to use various types such as a sail wing type, a multi-blade type, a paddle type, a Sbonius type, an S-type, a Darrieus type, and a propeller type.

In addition, a program for realizing each function of the present embodiment may be previously written to a ROM of the memory unit in a read only manner. Otherwise, the program recorded in a record medium such as a CD may be read out at need to be written in the memory unit. Further, the program transmitted through an electrical communication line such as the Internet may be written to the memory unit.

Although the invention has been described in the above preferred embodiment, the invention is never limited to those. It is to be understood that various embodiment not deviating from the spirit and scope of the invention can be made. Further, although operations and effects of the constructions of the invention have been described in the embodiment, the operations and effects are by way of example and never limit the invention.

### Brief Description of the Drawings

[Fig. 1] Fig. 1 is a block diagram illustrating a wind turbine generator.
[Fig. 2] Fig. 2 is a schematic diagram illustrating an entire construction of a wind turbine generator.
[Fig. 3] Fig. 3 is a flowchart illustrating a rotation control routine

### Description of Reference Numerals and Signs

- 1:: WIND TURBINE GENERATOR MAIN BODY
- 2:: CONTROLLER
- 3:: OPERATION DISPLAY UNIT
- 4:: BATTERY
- 5:: INVERTER
- 6:: EXTERNAL LOAD
- 7:: AUXILIARY CHARGER
- 11:: WIND TURBINE
- 12:: WIND TURBINE BLADE
- 13:: GYRATION SUPPORT MEMBER
- 14:: ROTATION SUPPORT MECHANISM
- 15:: PENETRATION SHAFT MEMBER
- 16:: ROTATING SHAFT CLUTCH
- 17:: HOLLOW SHAFT MEMBER
- 18:: ROTATIONAL SPEED DETECTOR
- 19:: DYNAMO
- 20:: STOPPING DEVICE
- 31:: CONTROL SECTION
- 32:: RECTIFYING SECTION
- 33:: BRIDGE DIODE
- 34:: CHARGING CAPACITOR
- 35:: DIODE
- 36:: CHARGING CONTROL SECTION
- 37:: COIL
- 38:: GENERATOR VOLTAGE DETECTOR
- 39:: CHARGING VOLTAGE DETECTOR
- 41:: ROTATIONAL SPEED INPUT PART
- 42:: CLUTCH DRIVING PART
- 43:: SHORT-CIRCUIT DRIVING PART
- 44:: AUXILIARY CHARGING OPERATION PART
- 45:: CHARGING CONTROL DRIVING PART
- 46:: INVERTER ON/OFF CONTROL PART
- 47:: OPERATION DISPLAY INPUT/OUTPUT PART
- 61:: DISPLAY UNIT
- 63:: DISPLAY CHANGEOVER SWITCH

## Claims

1. A generator comprising:
a driving force generating means rotated by natural energy to generate a driving force;
an electricity generating means operated by the driving force of the driving force generating means to generate electricity;
a short-circuit means for switching an output side of the electricity generating means between an output state and a short-circuit state; and
a magnitude recognition means for recognizing a magnitude of the natural energy in both of the output state and the short-circuit state based on a rotational speed of the driving force generating means in the output state and a rotational speed of the driving force generating means in the short-circuit state.

2. The generator according to claim 1, wherein wind power is used as the natural energy.

3. The generator according to claim 1, further comprising a control means for determining which state the electricity generating means should be changed over between the output state and the short-circuit state based on the rotational speed of the driving force generating means, and controlling the short-circuit means based on the determination result.

4. The generator according to claim 3, wherein wind power is used as the natural energy.

5. The generator according to claim 3, wherein the control means controls the short-circuit means in such a way that the short-circuit means is changed over from the output state to the short-circuit state when the rotational speed of the driving force generating means in the output state is equal to or higher than a braking initiation value, and the short-circuit means is changed over from the short-circuit state to the output state when the rotational speed of the driving force generating means in the short-circuit state is lower than a braking initiation value.

6. The generator according to claim 5, wherein wind power is used as the natural energy.
